# EUROPEAN PATENT SPECIFICATION

(11) **EP 4 606 508 B1**
(45) Date of publication and mention of the grant of the patent: **17.06.2026**
(21) Application number: 25154933.3
(22) Date of filing: 30.01.2025
(51) Int. Cl.: B23K 11/00, B23K 11/04, B23K 11/36, B23K 101/28

(54) **WELDING SPATTER PROTECTION DEVICE WITH INTEGRATED CLEANING SYSTEM**
SCHWEISSSPRITZERSCHUTZVORRICHTUNG MIT INTEGRIERTEM REINIGUNGSSYSTEM
DISPOSITIF DE PROTECTION CONTRE LES PROJECTIONS DE SOUDURE AVEC SYSTÈME DE NETTOYAGE INTÉGRÉ

(30) Priority: 26.02.2024 IT 202400004060
(43) Date of publication of application: 27.08.2025
(73) Proprietor: SMS group S.p.A., 33017 Tarcento (UD) (IT)
(72) Inventor: PETRI, Luca, I-33017 Tarcento, UDINE (IT); VIDONI, Marco, I-33017 Tarcento, UDINE (IT)
(74) Representative: Zanettin, Gianluigi

(56) References cited:
- JP-B2- 3 345 771
- US-A1- 2010 072 185
- US-A1- 2019 193 184

## Description

### FIELD OF APPLICATION

The present invention relates to a welding spatter protection device with integrated cleaning system (see for example US 2019/193184 A1).

Operatively, such a protection device is intended to be installed in machines for welding longitudinal metal products, in particular billets.

### BACKGROUND ART

As known, in the field of welding facilities for longitudinal metal products, e.g., such as billets, bars or blooms, welding is carried out by joining the head and tail of two consecutive metal products.

Generally, this type of welding is performed by sparking, conducting current into the products and approaching the head of one product and the tail of the other to each other so as to create a short circuit: the generated heat causes a melting of the metal resulting in the two ends being welded. Such a welding operation is performed directly on the metal product rolling line by means of welding machines provided with two structures equipped with clamps to block the two metal products to be welded. Both structures are mounted on a carriage moved at the advancement speed of the metal products along the rolling line. A first structure is fixed with respect to the carriage and the second structure instead slides so that the relative distance between the products to be welded can be varied until they come into contact.

Such a welding causes the generation of sparks resulting in the projection of molten steel particles (spatter or splashes), which hit the surrounding structures, depositing thereon with the risk of impairing the operation thereof. Furthermore, the accumulation of spatter can lead to the formation of deposits which can create dangerous electrical short circuits inside the machine itself over time.

In order to solve such problems, spatter containment devices to be installed in welding machines have been manufactured. Such devices comprise movable protection shields to be placed at the welding zone, as well as internal cleaning systems.

A welding spatter protection device is described in US patent application US2010072185A1. Such a protection device employs two protection shields which are moved by multiple linkages according to curvilinear trajectories to close the welding zone both at the top and at the bottom. The device is provided with a scraper sliding inside one of the two protection shields and a guillotine suitable to protect the scraper when not in operation. The protection shields have an open section for metal products to pass therethrough.

This solution, while operatively effective, has the disadvantage of being mechanically complex. Indeed, it requires the use of four actuators: two for the movement of the protection shields, one for the scraper and one for the guillotine.

A mechanically simpler welding spatter protection device is described in European patent EP3442738B1. Such a solution includes a single protection shield intended to enclose the welding zone only t the top.

In more detail, the protection shield consists of a box-like structure open at the bottom, in which a scraper is positioned. Two openings for the passage of products are obtained close to the open bottom, on two opposite side walls. The device is provided with a single actuator suitable to move the protection shield along a movement axis so that it is displaceable between a shielding position and a non-shielding position, while causing a relative movement between the scraper (fixed along the movement axis) and the internal walls of the protection shield, against which the scraper is in contact.

Such a solution is mechanically simpler and more compact by virtue of the presence of a single protection shield and a single actuator.

Generally, in welding machines, the metal products run on an external side of the machine. Therefore, the main structures of a welding machine are located substantially on one of the sides of the welding zone and partly thereabove. A collection and drainage channel for the cooling water is positioned at the bottom of the welding zone.

The spatter projected toward the drainage channel and on the side opposite to where the main machine structures are located are uncapable of damaging the machine itself, therefore it would be preferable not to intercept them with the protection device so as to ease the burden of internal cleaning. For this reason, it would be ideal to have a protection shield with asymmetric extension with respect to the welding zone, i.e., which extends thereabove and mainly on the side facing the main structures of the welding machine, while still ensuring sufficient protection for the operators' safety.

In the protection device described in EP3442738B1, the adoption of an asymmetric protection shield would result in axial asymmetry of the internal walls against which the scraper acts. Therefore, in its relative motion with respect to the protection shield, the scraper would be subjected to unbalanced mechanical stresses, which could cause uneven wear of the scraper over time, as well as misalignment of the scraper with the risk of jamming. This is a first limitation.

A second limitation is found in the presence of a single actuator and in the fact that the scraping is linked to the movement of the entire protection shield.

Due to the scraper wear, a single scraping pass cannot be sufficient to remove all the spatter from the internal walls and therefore the operation needs to be repeated. This implies the need to approach the protection shield to the hot product repeatedly resulting in the protection shield being heated again. Heating the shield makes it easier for the hot steel spatter to stick to the shield, thus contributing to making the removal thereof more difficult.

Therefore, two needs are currently unmet in the corresponding technical field.

A first need is to optimize the efficacy of the protection device by adopting an asymmetric protection shield without however compromising the functionality of the scraper.

A second need is to perform a sequence of scraping cycles without necessarily promoting the spatter to stick to the shield walls due to the heating thereof.

### OVERVIEW OF THE INVENTION

Therefore, it is the main object of the present invention to eliminate all or part of the drawbacks of the prior art described above by providing a welding spatter protection device with an integrated cleaning system, which can be provided with an asymmetric protection shield without however compromising the functionality of the internal cleaning system.

It is a further object of the present invention to provide a welding spatter protection device with an integrated cleaning system which performing allows a sequence of scraping cycles without necessarily promoting the spatter to stick to the walls of the shield due to the heating thereof.

In addition, it is a further object of the present invention to provide a welding spatter protection device with an integrated cleaning system which is cost-effective to manufacture.

Finally, it is a further object of the present invention to provide a welding spatter protection device with an integrated cleaning system which is operatively simple to manage.

### DESCRIPTION OF THE DRAWINGS

The technical features of the invention can be clearly found in the contents of the claims given below and the advantages thereof will become more apparent from the following detailed description, given with reference to the accompanying drawings, which show one or more embodiments thereof merely given by way of non-limiting examples, in which:

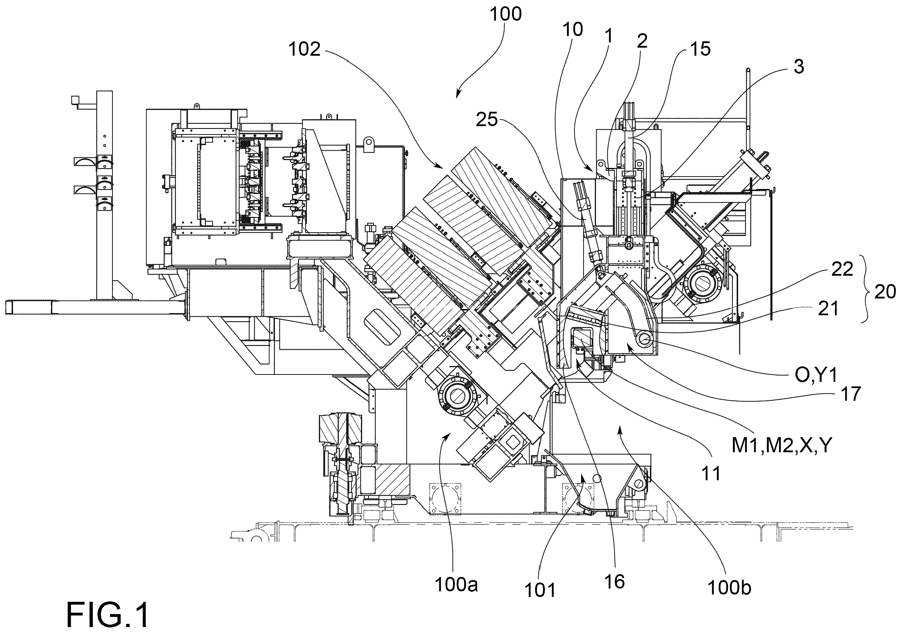

- figure 1 diagrammatically depicts a side view of a welding machine equipped with a protection device according to a possible embodiment;
- figures 2 and 3 show two different perspective views of the protection device in figure 1, illustrated separate from the welding machine;
- figure 4 shows an orthogonal side view of the device in figure 2 according to arrow IV here shown;

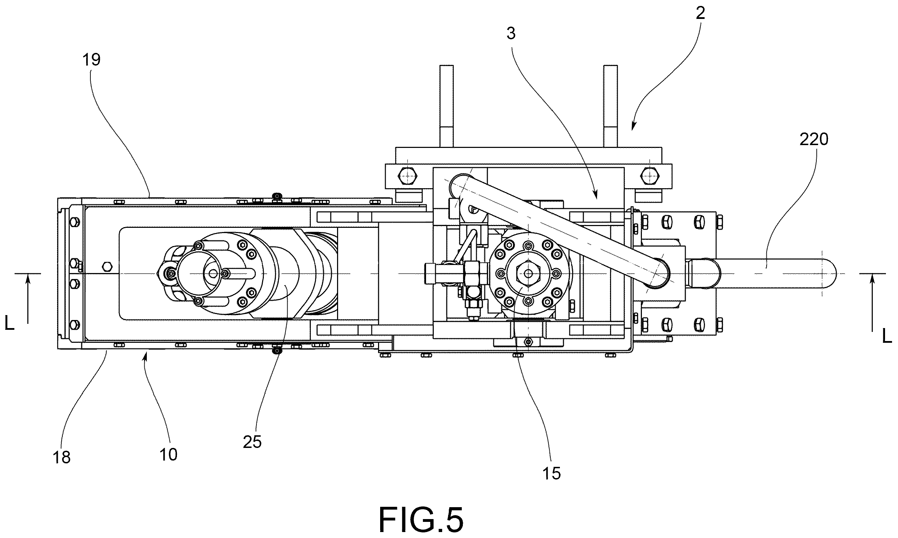

- figure 5 shows an orthogonal side view of the apparatus in figure 2 according to arrow V here shown;
- figure 6 shows an orthogonal section view of the device in figure 2 according to section plane L-L shown in figure 5, illustrated with the protection shield in the active position and a scraper of the integrated cleaning system in the disengaged position;
- figure 7 shows an orthogonal side view of the device in figure 2 according to arrow VII here shown;
- figure 8 shows the device in figure 4 illustrated with the protection shield in the passive position and the scraper of the integrated cleaning system in the engaged position;
- figure 10 shows the device in figure 6 illustrated with the protection shield in the passive position and the scraper of the integrated cleaning system in the engaged position;

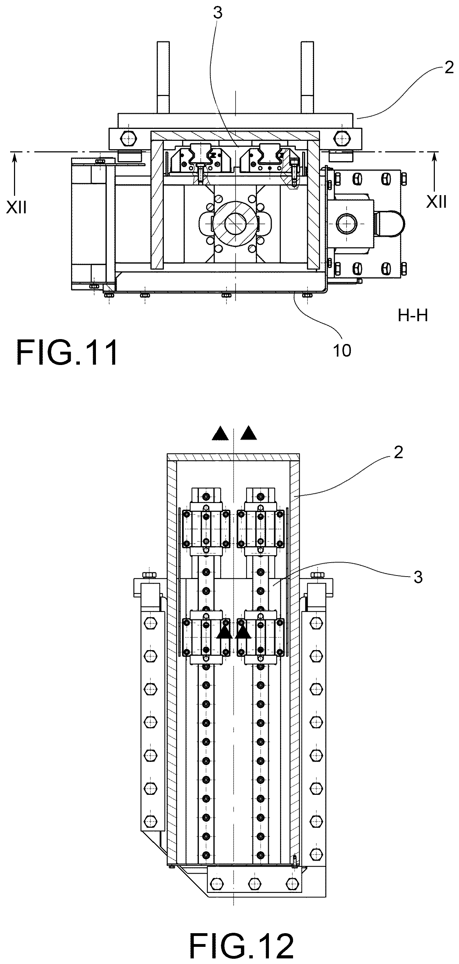

- figure 11 shows an orthogonal section view of the device in figure 8 according to plane H-H here indicated;
- figure 12 shows an orthogonal section view of the device in figure 11 according to section plane XII-XII here indicated.

The elements or parts of elements common to the embodiments described below will be indicated by the same reference numerals.

### DETAILED DESCRIPTION

The present invention relates to a welding spatter protection device with an integrated cleaning system.

Operatively, such a protection device is intended to be installed in machines for welding longitudinal metal products, in particular billets, but also bars or blooms which move aligned along an advancement axis X.

With reference to the accompanying drawings, a welding spatter protection device with an integrated cleaning system according to the invention is indicated by reference numeral 1 as a whole, and a welding machine provided with such a protection device is indicated by reference numeral 100.

Here and in the following description and claims, reference will be made to the device 1 in a condition of use. Any references to a lower or upper position, or to a horizontal or vertical orientation, must thus be understood in this sense.

According to a general embodiment of the invention, the protection device 1 comprises a support structure 2 intended to be anchored to the welding machine 100 above said advancement axis **X.**

The device 1 further comprises a movable structure 10, which delimits a first internal cavity 11 for welding spatter shielding.

The movable structure delimits said first internal cavity 11 by means of a plurality of internal side walls 11a,11b,11c,11d.

Said first internal cavity 11 is accessible through an inlet mouth 12, defined by an opening which is obtained on a bottom wall 10a of said movable structure 10.

The opening obtained on the bottom wall 10a of said movable structure 10 extends with two recesses 13,14 to two first walls 11a,11b of said side walls. Such two first walls 11a,11b are axially opposite to each other along an operating axis Y.

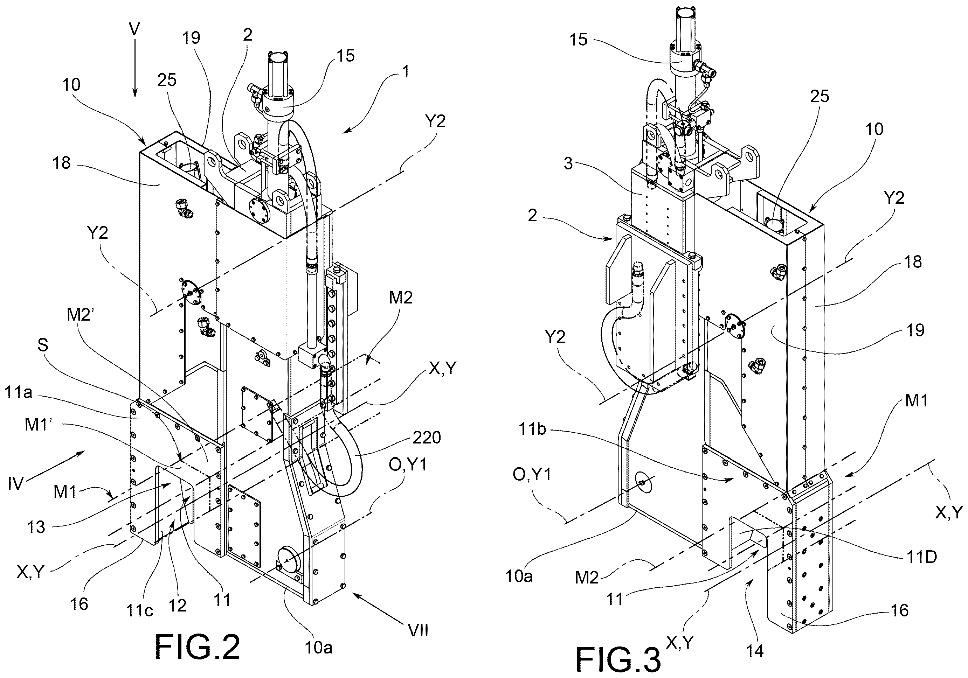

Operatively, as shown in figures 2 and 3, through said inlet mouth 12 said first internal cavity 11 is suitable to receive the welding zone S therein between the ends M1',M2' of two metal products M1 and M2.

More in detail, the first internal cavity 11 receives the welding zone S therein when said two recesses 12, 13 are aligned with the advancement axis X of said metal products M, i.e., when the aforesaid operating axis Y is substantially aligned with the advancement axis X of said metal products M1, M2. In this situation, each of the metal products M1, M2 crosses one of the two first side walls 10a, 10b at one of the two recesses 12, 13.

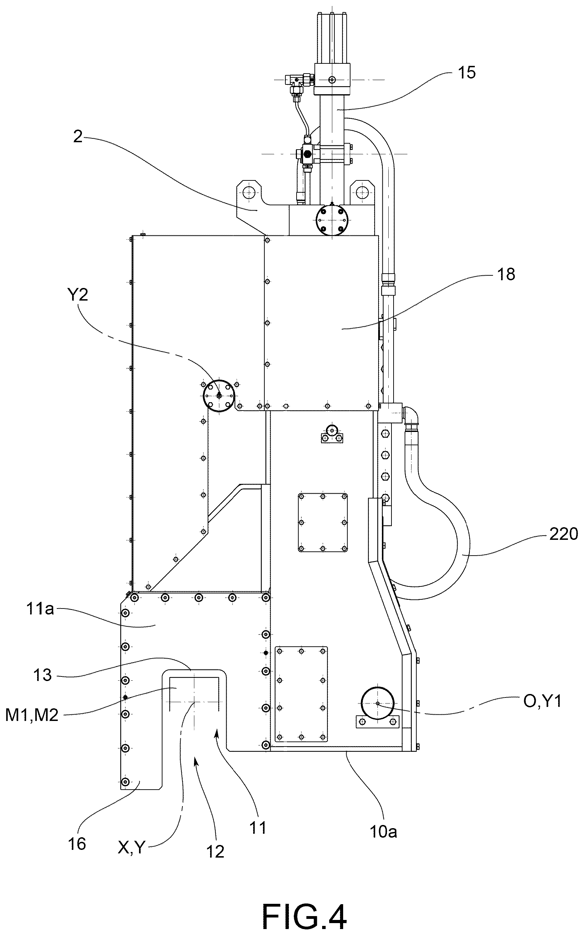

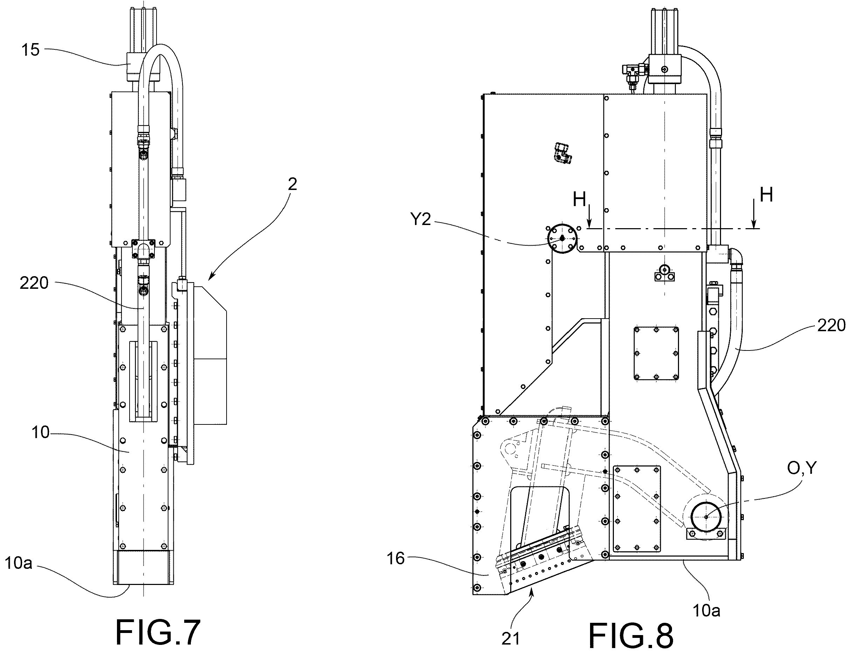

The movable structure 10 is movable with respect to said support structure 2 (and thus with respect to the welding machine 100 and the advancement axis X) by means of a first actuator 15 between:
- a lowered position, in which in use said first internal cavity 11 is placed astride the welding zone (see figures 2, 3, 4, 6), and
- a raised position, in which in use said first internal cavity 11 is moved away from said welding zone (see figures 8, 9, 10).

The device 1 further comprises a cleaning system 20 for cleaning the internal side walls 11a,11b,11c,11d of said first internal cavity from welding spatter.

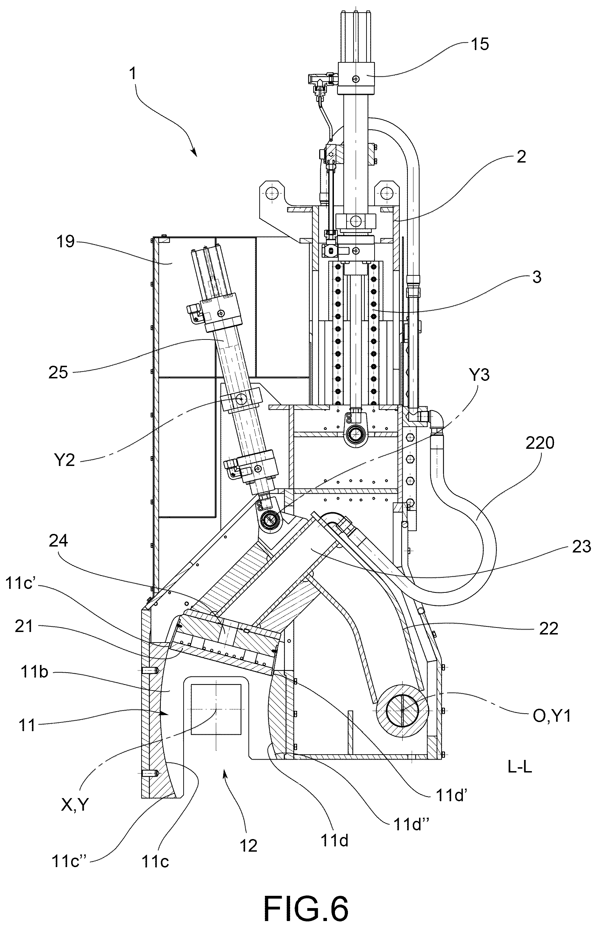

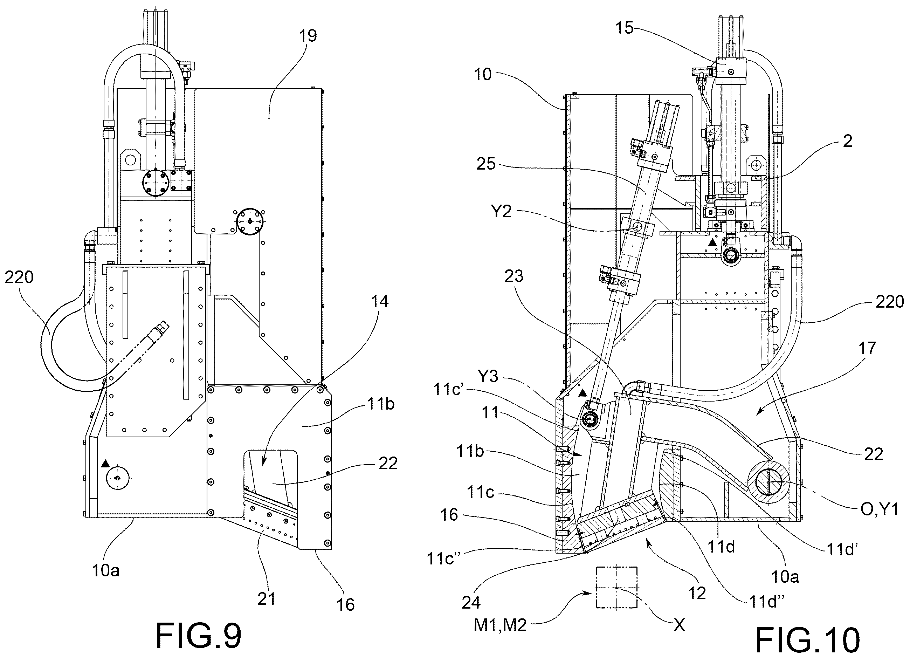

Such a cleaning system 20 comprises a scraper 21 which is movable with respect to said internal side walls 11a,11b,11c,11d with interference relation between said inlet mouth 12 and an internal stop position (see figures 6 and 10).

In particular, as shown in the accompanying figures, the first internal cavity 11 is delimited by:
- two first side walls 11a,11b, which extend transversely to said operating axis Y and on which the two recesses 12, 13 are obtained; and
- two second side walls 11c,11d, which interconnect the two first side walls 11,11b to each other in the direction defined by the operating axis Y.

According to a first aspect of the invention, two second walls 11c,11d interconnect said two first walls 11a,11b to each other and define two concentric cylindrical surfaces.

Such two concentric cylindrical surfaces extend from said inlet mouth 12 to said internal stop position.

As shown in figures 6 and 10, the central axis O of the two concentric cylindrical surfaces passes inside the movable structure 10.

Therefore, with respect to the central axis O, a radially outermost cylindrical surface 11c and a radially innermost cylindrical surface 11d can be identified.

According to a further aspect of the invention, the scraper 21 is rotationally connected to said movable structure 10 by means of a support arm 22.

The support arm 22 is pivoted on a rotation axis Y1 coincident with the axis O of said two concentric cylindrical surfaces 11c, 11d and supports said scraper 21, keeping it aligned on a radial plane with respect to the axis O.

The support arm 22 is rotationally actuatable about the axis Y1 (so as to move the scraper 21 inside the first internal cavity 10) by means of a second actuator 25.

In particular, the second actuator 25 consists of an electro-pneumatic or hydraulic piston.

In particular, the second actuator 25 is pivoted to the movable structure 10 in a first portion thereof to rotate about an axis Y2 and to the support arm 22 in a second portion thereof to rotate about an axis Y3. The second actuator 25 is thus capable of following the movements of the support arm 22 with respect to the movable structure 10.

According to a further aspect of the invention, the circumferential ends 11c',11c" and 11d',11d" of said two concentric cylindrical surfaces 11c,11d are mutually radially aligned at said inlet mouth 12 and said internal stop position so that the scraper 21 is always in contact with said two concentric cylindrical surfaces 11c,11d.

Said two concentric cylindrical surfaces 11c,11d are oriented so that the radially outermost cylindrical surface 11c extends beyond the bottom wall 10a of said movable structure 10, defining a shielding appendage 16. In other words, the first internal cavity 11 defines an asymmetric protection shield about the operating axis Y (and thus about the advancement axis X when the movable structure 10 is in the lowered position in use).

The shielding device 1, once positioned over the advancement axis X and then over the collection and drainage channel 101 for the cooling water of the machine, can thus be oriented so that the shielding appendage 16 faces the internal side of the welding machine, where the main structures 102 of the machine are located.

The first internal cavity 11 is thus:
- open at the bottom above the drainage channel 101;
- asymmetrically more laterally extended toward the internal side 100a of the welding machine 100 than toward the external side 100b by virtue of the shielding appendage 16 which extends downward from the bottom wall of the movable structure.

By virtue of such a conformation, the spatter projected toward the drainage channel 101 and on the side opposite to where the main structures 102 of the machine are located are not intercepted or are only partially intercepted, while ensuring sufficient protection for the operators' safety. It is thus possible to avoid unnecessarily "soiling" the protection screen with spatter uncapable of damaging the welding machine. On the contrary, the spatter projected toward the internal side 100a, where the main structures 102 of the machine are located, are instead shielded more effectively.

However, by virtue of the invention, the adoption of an asymmetric protection shield does not compromise the functionality of the internal cleaning system.

Indeed, the scraper 21 is always in contact with the two concentric cylindrical surfaces 11c,11d during its movement between said inlet mouth 12 and said internal stop position. Therefore, in its motion with respect to the internal side walls, the scraper is subjected to balanced mechanical stresses, meaning that the scraper is always in contact with the internal side walls throughout the peripheral extension thereof. This reduces the risk of uneven wear of the scraper over time, as well as the misalignment of the scraper with the risk of jamming.

Indeed, the curved conformation of the first internal cavity 11, in combination with the movement of the scraper 21, compensates for the asymmetry of the protection shield.

Furthermore, the welding spatter protection device with integrated cleaning system according to the invention allows performing a sequence of scraping cycles without necessarily promoting spatter to stick to the walls of the shield due to the heating thereof.

By virtue of the invention, and in particular by virtue of the scraper 21 being installed aboard the movable structure and being movable with respect thereto by means of its actuator 25, distinct from the actuator 15 on the movable structure 10, it is possible to separate the two movements. Therefore, the scraper 21 can perform a sequence of scraping cycles when the movable structure 10 is in the raised position. The scraping can thus be performed repeatedly (by moving the scraper several times between the inlet mouth and the internal stop position) without approaching the movable structure to the welding zone, thus preventing it from heating up.

Preferably, the two concentric cylindrical surfaces 11c,11d are oriented so that the radially innermost cylindrical surface 11d ends at the bottom wall 10a of said movable structure 10. The exposure to spatter of the surface of the first internal cavity 11 arranged on the external side of the welding machine is thus minimized.

Advantageously, as shown in figure 6 for example, the two concentric cylindrical surfaces 11c,11d extend circumferentially beyond said two recesses 12, 13 so that said scraper 21 is positioned above the two recesses when it reaches said internal stop position. Operatively, in this situation, the two recesses 12, 13 are free and can be engaged by the longitudinal metal products.

Preferably, the axis O of the two concentric cylindrical surfaces 10c,10d is parallel to said operating axis Y.

Preferably, the first two internal side walls 11a, 11b are flat and orthogonal to said operating axis Y.

Preferably, as shown in the accompanying figures, the first two internal side walls 11a, 11b extend in a direction orthogonal to the bottom wall 10a as much as the two concentric cylindrical surfaces 11c, 11d.

Advantageously, said movable structure 10 delimits a second internal cavity 17 in which the support arm 22 of the scraper 21 is housed and which is open on said first internal cavity 11 to allow the passage of said support arm 22.

The rotation axis Y1 of the support arm 22 of the scraper 21 coincides with the central axis O of the two concentric cylindrical surfaces and therefore preferably passes inside the movable structure 10. The rotation axis Y1 necessarily passes outside the first internal cavity, preferably inside the second internal cavity 17.

In the accompanying figures, the second actuator 25 is kinematically connected to the support arm 22 to define a third-degree lever. By virtue of the scraper actuator being distinct from the movable structure actuator, it is possible to choose the position of the second actuator 25 with respect to the scraper 21 and to the support arm pivot, so as to define a second-degree lever. In the latter case, the scraping effect obtained being equal, the applied force can be reduced or the actuator itself can be undersized.

In particular, said second internal cavity 17 is adjacent to said first internal chamber 11 and is separated from the latter by the internal side wall 11d which defines the radially innermost cylindrical surface.

Advantageously, the support arm 22 delimits an internal conduit 23 for feeding cooling water to the scraper 21, which in turn is provided with internal cooling channels 24 communicating with discharge holes. In the accompanying figures, the water supply tube is indicated by reference numeral 220.

Preferably, said first actuator 15 and said second actuator 25 are supported by said movable structure 10 above said first internal cavity 11 and said second internal cavity 17. The two actuators 15 and 25 are thus arranged in the part of the movable structure 10 furthest from the bottom wall 10a and thus least exposed to heat.

Advantageously, said movable structure 10 comprise a plurality of protective walls 18,19 for said first 15 and said second 25 actuators.

According to the embodiment of the invention shown in the accompanying figures, the movable structure 10 is defined by a box-like body, preferably defined by flat walls.

In particular, the flat walls of the box-like structure consist of removable panels to allow easier access to the mechanical components of actuators and scraper

In particular, the first two internal side walls 11a, 11b are flat and define external portions of said box-like body.

In particular, the bottom wall 10a of the movable structure 10 is flat and defines an external portion of said box-like body.

Preferably, the bottom wall 10a is parallel to the operating axis Y.

Preferably, the movable structure 10 is connected to said support structure 2 by means of at least one linear guiding device 3 suitable to guide the movement of said movable structure 10 between said lowered position and said raised position.

In particular, the device 1 is intended to be installed on the welding machine 100 so that the bottom wall 10a is horizontal. The movement between the raised position and the lowered position occurs according to a longitudinal direction orthogonal to the bottom wall, i.e., vertical.

The present invention relates to a welding machine 100 provided with a welding spatter protection device 1 according to the invention and in particular as described above. Said welding spatter protection device 1 is installed in the machine so that the shielding appendage 16 is arranged on an internal side 110b of the machine 100 where the main structures 102 of the machine itself are installed.

The present invention further relates to a method of shielding from welding spatter in a welding machine for longitudinal metal products moving aligned along an advancement axis X.

The method comprises the following operating steps:
a) installing a welding splatter protection device 1 according to the invention, and in particular as described above, in the welding machine 100;
b) bringing the movable structure 10 to the lowered position by actuating the first actuator 15, having previously brought the scraper 21 to the internal stop position by actuating the second actuator 25;
c) welding;
d) bringing the movable structure 10 from the lowered position to the raised position by actuating the first actuator 15;
e) carrying out one or more cleaning cycles of the first internal cavity 11 by moving the scraper 21 once or more times between the internal stop position and the inlet mouth 12 of the first internal cavity 11 by actuating the second actuator 25.

The advantages of the shielding method according to the invention are apparent from the above description in connection with the device and will not be repeated here.

The invention allows achieving several advantages which have been set out in the description.

The welding spatter protection device 1 with integrated cleaning system according to the invention can be provided with an asymmetric protection shield without however compromising the functionality of the internal cleaning system.

The welding spatter protection device 1 with integrated cleaning system according to the invention allows performing a sequence of scraping cycles without necessarily promoting spatter to stick to the walls of the shield due to the heating thereof.

The welding spatter protection device 1 with integrated cleaning system according to the invention is cost-effective to manufacture.

The welding spatter protection device 1 with integrated cleaning system according to the invention is operatively simple to manage.

Therefore, the invention thus devised achieves the preset objects.

Obviously, in practice, it may also take shapes and configurations different from that disclosed above, without departing from the present scope of protection, such as defined in the appended claims.

Moreover, all details may be replaced by technically equivalent elements, and any size, shape, and material may be used according to needs.

## Claims

1. Protection device (1) from welding spatter intended to be installed on a welding machine for longitudinal metal products moving aligned along an advancement axis (X), said device (1) comprising:
- a support structure (2) intended to be anchored to the welding machine (100) above said advancement axis (X);
- a movable structure (10), which delimits a first internal shielding cavity (11) by means of a plurality of internal side walls (11a,11b,11c,11d), said first internal cavity (11) being accessible by means of an inlet mouth (12) which is defined by an opening which is obtained on a bottom wall (10a) of said movable structure (10) and extends itself with two recesses (13,14) to two first walls (11a,11b) of said side walls axially opposite along an operating axis (Y), wherein through said inlet mouth (12) said first internal cavity (11) is suitable to receive therein the welding zone between the ends of two metal products, aligning said two recesses (12, 13) with the advancement axis (X) of said metal products (M), said movable structure (10) being movable with respect to said support structure (2) by means of a first actuator (15) between a lowered position, in which in use said first internal cavity (11) is placed astride the welding zone, and a raised position, in which in use said first internal cavity (11) is moved away from said welding zone,
- a cleaning system (20) for cleaning the internal side walls (11a,11b,11c,11d) of said first internal cavity from welding spatter, comprising a scraper (21) which is movable with respect to said internal side walls (11a,11b,11c,11d) in an interference relation between said inlet mouth (12) and an internal stop position,
**characterised in that** two second walls (11c,11d) of said side walls interconnect said two first walls (11a,11b) to each other and define two concentric cylindrical surfaces extending from said inlet mouth (12) to said internal stop position,
**in that** said scraper (21) is rotationally connected to said movable structure (10) by means of a support arm (22) which is pivoted on a rotation axis (Y1) coincident with the axis (O) of said two concentric cylindrical surfaces (11c, 11d) and supports said scraper (21), keeping it aligned on a radial plane, said support arm (22) being actuatable by means of a second actuator (25),
**and in that** the circumferential ends (11c',11c";11d',11d") of said two concentric cylindrical surfaces (11c,11d) at said inlet mouth (12) and at said internal stop position are radially aligned so that the scraper (21) is always in contact with said two concentric cylindrical surfaces (11c,11d), said two concentric cylindrical surfaces (11c,11d) being oriented so that the radially outermost cylindrical surface (11c) extends beyond the bottom wall (10a) of said movable structure (10), defining a shielding appendage (16).

2. Device (1) according to claim 1, wherein said two concentric cylindrical surfaces (11c,11d) are oriented so that the radially innermost cylindrical surface (11d) ends at the bottom wall (10a) of said movable structure (10).

3. Device (1) according to claim 1, wherein said two concentric cylindrical surfaces (11c,11d) extend circumferentially beyond said two recesses (12, 13) so that said scraper (21), when it reaches said internal stop position in a stop position, is positioned above said two recesses.

4. Device (1) according to claim 1, 2 or 3, wherein the axis (O) of the two concentric cylindrical surfaces (10c,10d) is parallel to said operating axis (Y).

5. Device (1) according to any one of the preceding claims, wherein said movable structure (10) delimits a second internal cavity (17) within which the support arm (22) of the scraper (21) is housed and which is open on said first internal cavity (11) to allow the passage of said support arm (22).

6. Device (1) according to claim 5, wherein said second internal cavity (17) is adjacent to said first internal chamber (11) and is separated from said first internal chamber by the internal side wall (11d) which defines the radially innermost cylindrical surface.

7. Device (1) according to any one of the preceding claims, wherein the support arm (22) delimits an internal conduit (23) for feeding cooling water to the scraper (21), which in turn is provided with internal cooling channels (24) communicating with discharge holes.

8. Device (1) according to any one of the preceding claims, wherein said first actuator (15) and said second actuator (25) are supported by said movable structure (10) above said first internal cavity (11) and said second internal cavity (17).

9. Device (1) according to claim 8, wherein said movable structure (10) comprises protective walls (18,19) for said first (15) and said second actuator (25).

10. Device (1) according to any one of the preceding claims, wherein the first two internal side walls (11a, 11b) are flat and orthogonal to said operating axis (Y).

11. Device (1) according to any one of the preceding claims, wherein said movable structure (10) is defined by a box-like body, preferably defined by flat walls.

12. Device (1) according to claim 11, wherein the first two internal side walls (11a, 11b) are flat and define external portions of said box-like body.

13. Device (1) according to claim 11 or 12, wherein said bottom wall (10a) is flat and defines an external portion of said box-like body.

14. Device (1) according to claim 13, wherein said bottom wall (10a) is parallel to the operating axis (Y).

15. Device (1) according to any one of the preceding claims, wherein said movable structure (10) is connected to said support structure (2) by means of at least one linear guiding device (3) suitable to guide the movement of said movable structure (10) between said lowered position and said raised position.

16. Welding machine (100) provided with a welding spatter protection device, **characterised in that** said weld spatter protection device is a welding spatter protection device (1) according to any one of the preceding claims, and **in that** said welding spatter protection device (1) is installed in the machine so that the shielding appendage (16) is arranged on an internal side (110b) of the machine (100) where the main structures (102) of the machine itself are installed.

17. Method for shielding from welding spatter in a welding machine for longitudinal metal products moving aligned along an advancement axis (X), comprising the following operating steps:
a) installing a welding spatter protection device (1) according to any one of claims 1 to 15 in the welding machine (100);
b) bringing the movable structure (10) to the lowered position by actuating the first actuator (15), having previously brought the scraper (21) to the internal stop position by actuating the second actuator (25);
c) welding;
d) bringing the movable structure (10) from the lowered position to the raised position by actuating the first actuator (15);
e) carrying out one or more cleaning cycles of the first internal cavity (11) by moving the scraper (21) between the internal stop position and the inlet mouth (12) of the first internal cavity (11) by actuating the second actuator (25).

## Patentansprüche

1. Schutzvorrichtung (1) gegen Schweissspritzer, die zur Installation an einer Schweißmaschine für längliche Metallprodukte bestimmt ist, die sich entlang einer Vorschubachse (X) ausgerichtet bewegen, die Vorrichtung (1) umfassend:
- eine Trägerstruktur (2), die dazu bestimmt ist, an der Schweißmaschine (100) oberhalb der Vorschubachse (X) verankert zu werden;
- eine bewegliche Struktur (10), die einen ersten inneren Schutzhohlraum (11) mittels einer Mehrzahl von inneren Seitenwänden (11a,11b,11c,11d) begrenzt, wobei der erste innere Hohlraum (11) mittels einer Eintrittsöffnung (12) zugänglich ist, die durch eine Öffnung definiert wird, die an einer Bodenwand (10a) der beweglichen Struktur (10) erhalten wird und sich selbst mit zwei Ausnehmungen (13,14) zu den zwei ersten Wänden (11a,11b) der Seitenwände erstreckt, die axial entlang einer Betriebsachse (Y) gegenüberliegen, wobei durch die Eintrittsöffnung (12) der erste innere Hohlraum (11) geeignet ist, den Schweißbereich zwischen den Enden zweier Metallprodukte darin aufzunehmen, indem die zwei Ausnehmungen (12, 13) mit der Vorschubachse (X) der Metallprodukte (M) ausgerichtet werden, wobei die bewegliche Struktur (10) mit Bezug auf die Trägerstruktur (2) mittels eines ersten Aktuators (15) zwischen einer abgesenkten Position, in der sich im Gebrauch der erste innere Hohlraum (11) neben dem Schweißbereich befindet, und einer angehobenen Position, in der im Gebrauch der erste innere Hohlraum (11) von dem Schweißbereich entfernt wird, beweglich ist,
- ein Reinigungssystem (20) zum Reinigen der inneren Seitenwände (11a,11b,11c,11d) des ersten inneren Hohlraums von Schweissspritzern, umfassend einen Schaber (21), der in Bezug auf die inneren Seitenwände (11a,11b,11c,11d) in einer Interferenzbeziehung zwischen der Eintrittsöffnung (12) und einer inneren Anschlagposition beweglich ist,
**dadurch gekennzeichnet, dass** zwei zweite Wände (11c,11d) der Seitenwände die zwei ersten Wände (11a,11b) miteinander verbinden und zwei konzentrische zylindrische Oberflächen definieren, die sich von der Eintrittsöffnung (12) zu der inneren Anschlagposition erstrecken,
dadurch, dass der Schaber (21) drehbar mit der beweglichen Struktur (10) mittels eines Tragarms (22) verbunden ist, der um eine Drehachse (Y1) schwenkbar ist, die mit der Achse (O) der zwei konzentrischen zylindrischen Oberflächen (11c, 11d) übereinstimmt und den Schaber (21) trägt, indem er ihn in einer radialen Ebene ausgerichtet hält, wobei der Tragarm (22) mittels eines zweiten Aktuators (25) betätigt werden kann,
und dadurch, dass die Umfangsenden (11c',11c";11d',11d") der zwei konzentrischen zylindrischen Oberflächen (11c,11d) an der Eintrittsöffnung (12) und an der inneren Anschlagposition radial ausgerichtet sind, so dass der Schaber (21) immer mit den zwei konzentrischen zylindrischen Oberflächen (11c,11d) in Kontakt steht, wobei die zwei konzentrischen zylindrischen Oberflächen (11c,11d) ausgerichtet sind, sodass die radial äußerste zylindrische Oberfläche (11c) sich über die Bodenwand (10a) der beweglichen Struktur (10) erstreckt und einen Schutzzusatz (16) definiert.

2. Vorrichtung (1) nach Anspruch 1, wobei die zwei konzentrischen zylindrischen Oberflächen (11c,11d) ausgerichtet sind, sodass die radial innerste zylindrische Oberfläche (11d) an der Bodenwand (10a) der beweglichen Struktur (10) endet

3. Vorrichtung (1) nach Anspruch 1, wobei die zwei konzentrischen zylindrischen Oberflächen (11c,11d) sich umlaufend über die zwei Ausnehmungen (12, 13) erstrecken, so dass der Schaber (21), wenn er die innere Anschlagposition in einer Anschlagposition erreicht, oberhalb der zwei Ausnehmungen positioniert wird.

4. Vorrichtung (1) nach Anspruch 1, 2 oder 3, wobei die Achse (O) der zwei konzentrischen zylindrischen Oberflächen (10c,10d) parallel zu der Betriebsachse (Y) ist.

5. Vorrichtung (1) nach einem der vorhergehenden Ansprüche, wobei die bewegliche Struktur (10) einen zweiten inneren Hohlraum (17) begrenzt, innerhalb dessen der Tragarm (22) des Schabers (21) aufgenommen wird und der auf dem ersten inneren Hohlraum (11) offen ist, um den Durchgang des Tragarms (22) zu ermöglichen.

6. Vorrichtung (1) nach Anspruch 5, wobei der zweiten inneren Kammer (17) an den ersten inneren Kammer (11) angrenzend ist und von dem ersten inneren Hohlraum durch die innere Seitenwand (11d) getrennt ist, die die radial innerste zylindrische Oberfläche definiert.

7. Vorrichtung (1) nach einem der vorhergehenden Ansprüche, wobei der Tragarm (22) eine innere Leitung (23) zur Zuführung von Kühlwasser zu dem Schaber (21) begrenzt, die ihrerseits mit inneren Kühlkanälen (24) versehen ist, die mit Abflussöffnungen in Kommunikation stehen.

8. Vorrichtung (1) nach einem der vorhergehenden Ansprüche, wobei der erste Aktuator (15) und der zweite Aktuator (25) von der beweglichen Struktur (10) oberhalb des ersten inneren Hohlraums (11) und des zweiten inneren Hohlraums (17) getragen werden.

9. Vorrichtung (1) nach Anspruch 8, wobei die bewegliche Struktur (10) Schutzwände (18,19) für den ersten (15) und den zweiten Aktuator (25) umfasst.

10. Vorrichtung (1) nach einem der vorhergehenden Ansprüche, wobei die ersten zwei inneren Seitenwände (11a, 11b) eben und orthogonal zu der Betriebsachse (Y) ausgebildet sind.

11. Vorrichtung (1) nach einem der vorhergehenden Ansprüche, wobei die bewegliche Struktur (10) durch einen kastenförmigen Körper definiert wird, vorzugsweise durch ebene Wände definiert wird.

12. Vorrichtung (1) nach Anspruch 11, wobei die ersten zwei inneren Seitenwände (11a, 11b) eben sind und äußere Abschnitte des kastenförmigen Körpers definieren.

13. Vorrichtung (1) nach Anspruch 11 oder 12, wobei die Bodenwand (10a) eben ist und einen äußeren Abschnitt des kastenförmigen Körpers definiert.

14. Vorrichtung (1) nach Anspruch 13, wobei die Bodenwand (10a) parallel zu der Betriebsachse (Y) ist.

15. Vorrichtung (1) nach einem der vorhergehenden Ansprüche, wobei die bewegliche Struktur (10) mit der Trägerstruktur (2) mittels mindestens einer linearen Führungsvorrichtung (3) verbunden ist, die geeignet ist, die Bewegung der beweglichen Struktur (10) zwischen der abgesenkten Position und der angehobenen Position zu führen.

16. Schweißmaschine (100), die mit einer Schweissspritzerschutzvorrichtung versehen ist, **dadurch gekennzeichnet, dass** die Schweissspritzerschutzvorrichtung eine Schweissspritzerschutzvorrichtung nach einem der vorhergehenden Ansprüche ist, und dadurch, dass die Schweissspritzerschutzvorrichtung (1) in der Maschine installiert ist, sodass der Schutzzusatz (16) an einer inneren Seite (110b) der Maschine (100) angeordnet ist, an der die Hauptstrukturen (102) der Maschine selbst installiert sind.

17. Verfahren zum Schutz gegen Schweißspritzer in einer Schweißmaschine für längliche Metallprodukte, die sich ausgerichtet entlang einer Vorschubachse (X) bewegen, umfassend die folgenden Betriebsschritte:
a) Installieren einer Schweissspritzerschutzvorrichtung (1) nach einem der Ansprüche 1 bis 15 in der Schweißmaschine (100);
b) Bringen der beweglichen Struktur (10) in die abgesenkte Position durch Betätigung des ersten Aktuators (15), nachdem zuvor der Schaber (21) in die innere Anschlagposition durch Betätigung des zweiten Aktuators (25) gebracht wurde;
c) Schweißen;
d) Bringen der beweglichen Struktur (10) von der abgesenkten Position in die angehobene Position durch Betätigung des ersten Aktuators (15);
e) Durchführen eines oder mehrerer Reinigungszyklen des ersten inneren Hohlraums (11) durch Bewegen des Schabers (21) zwischen der inneren Anschlagposition und der Eintrittsöffnung (12) des ersten inneren Hohlraums (11) durch Betätigung des zweiten Aktuators (25).

## Revendications

1. Dispositif de protection (1) destiné à être installé sur une machine de soudage pour des produits métalliques longitudinaux se déplaçant alignés le long d'un axe d'avancement (X), ledit dispositif (1) comprenant :
- une structure de support (2) destinée à être ancrée à la machine de soudage (100) au-dessus dudit axe d'avancement (X) ;
- une structure mobile (10), qui délimite une première cavité interne de protection (11) au moyen d'une pluralité de parois latérales internes (11a,11b,11c,11d), ladite première cavité interne (11) étant accessible au moyen d'une bouche d'entrée (12) qui est définie par une ouverture qui est obtenue sur une paroi de fond (10a) de ladite structure mobile (10) et s'étend avec deux évidements (13,14) vers deux premières parois (11a,11b) desdites parois latérales opposées axialement le long d'un axe de fonctionnement (Y), dans lequel au moyen de ladite bouche d'entrée (12) ladite première cavité interne (11) est apte à recevoir en son sein la zone de soudage entre les extrémités de deux produits métalliques, en alignant lesdits deux évidements (12, 13) avec l'axe d'avancement (X) desdits produits métalliques (M), ladite structure mobile (10) étant mobile par rapport à ladite structure de support (2) au moyen d'un premier actionneur (15) entre une position abaissée, dans laquelle en utilisation ladite première cavité interne (11) est disposée à cheval sur la zone de soudage, et une position relevée, dans laquelle en utilisation ladite première cavité interne (11) est éloignée de ladite zone de soudage,
- un système de nettoyage (20) pour nettoyer les parois latérales internes (11a,11b,11c,11d) de ladite première cavité interne comprenant un racloir (21) qui est mobile par rapport auxdites parois latérales internes (11a,11b,11c,11d) dans une relation d'interférence entre ladite bouche d'entrée (12) et une position d'arrêt interne,
**caractérisé en ce que** deux secondes parois (11c,11d) desdites parois latérales relient lesdites deux premières parois (11a,11b) l'une à l'autre et définissent deux surfaces cylindriques concentriques s'étendant de ladite bouche d'entrée (12) à ladite position d'arrêt interne,
**en ce que** ledit racloir (21) est relié en rotation à ladite structure mobile (10) au moyen d'un bras de support (22) qui est articulé sur un axe de rotation (Y1) coïncidant avec l'axe (O) desdites deux surfaces cylindriques concentriques (11c, 11d) et supporte ledit racloir (21), en le maintenant aligné sur un plan radial, ledit bras de support (22) étant actionnable au moyen d'un second actionneur (25),
**et en ce que** les extrémités circonférentielles (11c',11c";11d',11d") desdites deux surfaces cylindriques concentriques (11c,11d) au niveau de ladite bouche d'entrée (12) et de ladite position d'arrêt interne sont alignées radialement de sorte que le racloir (21) est toujours en contact avec lesdites deux surfaces cylindriques concentriques (11c,11d), lesdites deux surfaces cylindriques concentriques (11c,11d) étant orientées de sorte que la surface cylindrique la plus externe radialement (11c) s'étend au-delà de la paroi de fond (10a) de ladite structure mobile (10), en définissant un appendice de protection (16).

2. Dispositif (1) selon la revendication 1, dans lequel lesdites deux surfaces cylindriques concentriques (11c,11d) sont orientées de sorte que la surface cylindrique la plus interne radialement (11d) se termine à la paroi de fond (10a) de ladite structure mobile (10)

3. Dispositif (1) selon la revendication 1, dans lequel lesdites deux surfaces cylindriques concentriques (11c,11d) s'étendent circonférentiellement au-delà desdits deux évidements (12, 13) de sorte que ledit racloir (21), lorsqu'il atteint ladite position d'arrêt interne en position d'arrêt, est positionné au-dessus desdits deux évidements.

4. Dispositif (1) selon la revendication 1, 2 ou 3, dans lequel l'axe (O) desdites deux surfaces cylindriques concentriques (10c,10d) est parallèle audit axe de fonctionnement (Y)

5. Dispositif (1) selon l'une quelconque des revendications précédentes, dans lequel ladite structure mobile (10) délimite une seconde cavité interne (17) à l'intérieur de laquelle le bras de support (22) du racloir (21) est logé et qui est ouverte sur ladite première cavité interne (11) pour permettre le passage dudit bras de support (22).

6. Dispositif (1) selon la revendication 5, dans lequel ladite seconde cavité interne (17) est adjacente à ladite première chambre interne (11) et est séparée de ladite première chambre interne par la paroi latérale interne (11d) qui définit la surface cylindrique la plus interne radialement.

7. Dispositif (1) selon l'une quelconque des revendications précédentes, dans lequel le bras de support (22) délimite un conduit interne (23) pour alimenter en eau de refroidissement le racloir (21), lequel à son tour est pourvu de canaux de refroidissement internes (24) communiquant avec des orifices de décharge.

8. Dispositif (1) selon l'une quelconque des revendications précédentes, dans lequel ledit premier actionneur (15) et ledit second actionneur (25) sont supportés par ladite structure mobile (10) au-dessus de ladite première cavité interne (11) et de ladite seconde cavité interne (17).

9. Dispositif (1) selon la revendication 8, dans lequel ladite structure mobile (10) comprend des parois de protection (18,19) pour ledit premier (15) et ledit second actionneur (25).

10. Dispositif (1) selon l'une quelconque des revendications précédentes, dans lequel les deux premières parois latérales internes (11a, 11b) sont planes et orthogonales audit axe de fonctionnement (Y).

11. Dispositif (1) selon l'une quelconque des revendications précédentes, dans lequel ladite structure mobile (10) est définie par un corps de type boîte, de préférence défini par des parois planes.

12. Dispositif (1) selon la revendication 11, dans lequel les deux premières parois latérales internes (11a, 11b) sont planes et définissent des portions externes dudit corps de type boîte.

13. Dispositif (1) selon la revendication 11 ou 12, dans lequel ladite paroi de fond (10a) est plane et définit une portion externe dudit corps de type boîte.

14. Dispositif (1) selon la revendication 13, dans lequel ladite paroi de fond (10a) est parallèle à l'axe de fonctionnement (Y).

15. Dispositif (1) selon l'une quelconque des revendications précédentes, dans lequel ladite structure mobile (10) est reliée à ladite structure de support (2) au moyen d'au moins un dispositif de guidage linéaire (3) apte à guider le mouvement de ladite structure mobile (10) entre ladite position abaissée et ladite position relevée.

16. Machine de soudage (100) pourvue d'un dispositif de protection contre les projections de soudure,
**caractérisée en ce que** ledit dispositif de protection contre les projections de soudure est un dispositif de protection contre les projections de soudure (1) selon l'une quelconque des revendications précédentes,
et **en ce que** ledit dispositif de protection contre les projections de soudure (1) est installé dans la machine de sorte que l'appendice de protection (16) est disposé sur un côté interne (110b) de la machine (100) où les structures principales (102) de la machine elle-même sont installées.

17. Méthode de protection contre les projections de soudure dans une machine de soudage pour des produits métalliques longitudinaux se déplaçant alignés le long d'un axe d'avancement (X), comprenant les étapes de fonctionnement suivantes :
a) installer un dispositif de protection contre les projections de soudure (1) selon l'une quelconque des revendications 1 à 15 dans la machine de soudage (100);
b) amener la structure mobile (10) à la position abaissée en actionnant le premier actionneur (15), après avoir préalablement amené le racloir (21) à la position d'arrêt interne en actionnant le second actionneur (25);
e) soudage ;
d) amener la structure mobile (10) de la position abaissée à la position relevée en actionnant le premier actionneur (15);
e) effectuer un ou plusieurs cycles de nettoyage de la première cavité interne (11) en déplaçant le racloir (21) entre la position d'arrêt interne et la bouche d'entrée (12) de la première cavité interne (11) en actionnant le second actionneur (25).
